# EUROPEAN PATENT APPLICATION

(11) **EP 4 507 233 A1**
(43) Date of publication of application: **12.02.2025**
(21) Application number: 23822888.6
(22) Date of filing: 23.05.2023
(51) Int. Cl.: H04L 5/00

(54) **DATA TRANSMISSION METHOD AND DEVICE, AND STORAGE MEDIUM**

(30) Priority: 15.06.2022 CN 202210682185
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); CHEN, Mengzhu, Shenzhen, Guangdong 518057 (CN); XU, Jun, Shenzhen, Guangdong 518057 (CN); HU, Liujun, Shenzhen, Guangdong 518057 (CN)
(74) Representative: Aipex B.V.
(86) International application number: PCT/CN2023/095730
(87) International publication number: WO 2023/241318

(57) **Abstract**

Provided are a data transmission method and device and a storage medium. The data transmission method applied to a first communication node includes detecting a first signal; and receiving a preamble information block according to the detection result of the first signal, where the preamble information block includes at least one of: a synchronization system message block, a synchronization signal, a primary system message bearer channel, a secondary system message bearer channel, a first reference signal, or a second signal.

## Description

### TECHNICAL FIELD

The present application relates to communication, for example, a data transmission method and device and a storage medium.

### BACKGROUND

After being powered on, a terminal performs an initial access process to access a system without any prior information. Since there is no prior information, the reception of a synchronization signal and a system message in the initial access process consumes a large amount of power from the terminal.

### SUMMARY

Embodiments of the present application provide a data transmission method and device and a storage medium, so that the power consumption of a first communication node is effectively reduced.

An embodiment of the present application provides a data transmission method applied to the first communication node. The method includes operations as below.

A first signal is detected. A preamble information block is received according to the detection result of the first signal. The preamble information block includes at least one of the following: a synchronization system message block, a synchronization signal, a primary system message bearer channel, a secondary system message bearer channel, a first reference signal, or a second signal.

An embodiment of the present application provides a data transmission method applied to a second communication node. The method includes operations as below.

The first signal is sent. The first signal is used to indicate sending of the preamble information block. The preamble information block is sent. The preamble information block includes at least one of the following: a synchronization system message block, a synchronization signal, a primary system message bearer channel, a secondary system message bearer channel, a first reference signal, or a second signal.

An embodiment of the present application provides a data transmission device. The device includes a memory and one or more processors. The memory is configured to store one or more programs. When executing the one or more programs, the one or more processors perform the data transmission method described in any preceding embodiment.

An embodiment of the present application provides a storage medium. The storage medium stores a computer program. When executing the computer program, a processor performs the data transmission method described in any preceding embodiment.

### BRIEF DESCRIPTION OF DRAWINGS

FIG. 1 is a flowchart of a data transmission method according to an embodiment of the present application.
FIG. 2 is a flowchart of a data transmission method according to another embodiment of the present application.
FIG. 3 is a configuration diagram of the receiving position between a first signal and a preamble information block according to an embodiment of the present application.
FIG. 4 is a transmission diagram of a preamble information block according to an embodiment of the present application.
FIG. 5 is a transmission diagram of another preamble information block according to an embodiment of the present application.
FIG. 6 is a transmission diagram of a preamble information block according to another embodiment of the present application.
FIG. 7 is a transmission diagram of a preamble information block according to another embodiment of the present application.
FIG. 8 is a transmission diagram of a preamble information block according to another embodiment of the present application.
FIG. 9 is a transmission diagram of a preamble information block according to another embodiment of the present application.
FIG. 10 is a transmission diagram of a preamble information block according to another embodiment of the present application.
FIG. 11 is a transmission diagram of a preamble information block according to another embodiment of the present application.
FIG. 12 is a transmission diagram of a preamble information block according to another embodiment of the present application.
FIG. 13 is a transmission diagram of a preamble information block according to another embodiment of the present application.
FIG. 14 is a transmission diagram of a preamble information block according to another embodiment of the present application.
FIG. 15 is a transmission diagram of a preamble information block according to another embodiment of the present application.
FIG. 16 is a transmission diagram of a preamble information block according to another embodiment of the present application.
FIG. 17 is a transmission diagram of a preamble information block according to another embodiment of the present application.
FIG. 18 is a transmission diagram of a preamble information block according to another embodiment of the present application.
FIG. 19 is a configuration diagram of the sending position between a first signal and a preamble information block according to an embodiment of the present application.
FIG. 20 is a configuration diagram of the sending position between a first signal and a preamble information block according to another embodiment of the present application.
FIG. 21 is a configuration diagram of the sending position between a first signal and a preamble information block according to another embodiment of the present application.
FIG. 22 is a configuration diagram of the sending position between a first signal and a preamble information block according to another embodiment of the present application.
FIG. 23 is a block diagram of a data transmission apparatus according to an embodiment of the present application.
FIG. 24 is a block diagram of a data transmission apparatus according to another embodiment of the present application.
FIG. 25 is a diagram illustrating the structure of a data transmission device according to an embodiment of the present application.

### DETAILED DESCRIPTION

Embodiments of the present application are described hereinafter in conjunction with the drawings. The present application is described below in conjunction with the embodiments and the drawings, and the examples illustrated are intended only to explain the present application.

In a new radio (NR) system, a primary synchronization signal (PSS), a secondary synchronization signal (SSS), and a physical broadcast channel (PBCH) are transmitted in the form of a synchronization system message block (synchronization signal and PBCH block (SSB)). User equipment (UE) searches for a synchronization signal on a specific frequency point. If the synchronization signal is searched, the UE demodulates the PBCH. The value range of the sending period of the SSB is {5 ms, 10 ms, 20 ms, 40 ms, 80 ms, 160 ms}. The value range of the sending period defaults to 20 ms. On a time domain, one SSB occupies four orthogonal frequency division multiplexing (OFDM) symbols. On a frequency domain, one SSB occupies 20 resource blocks (RBs).

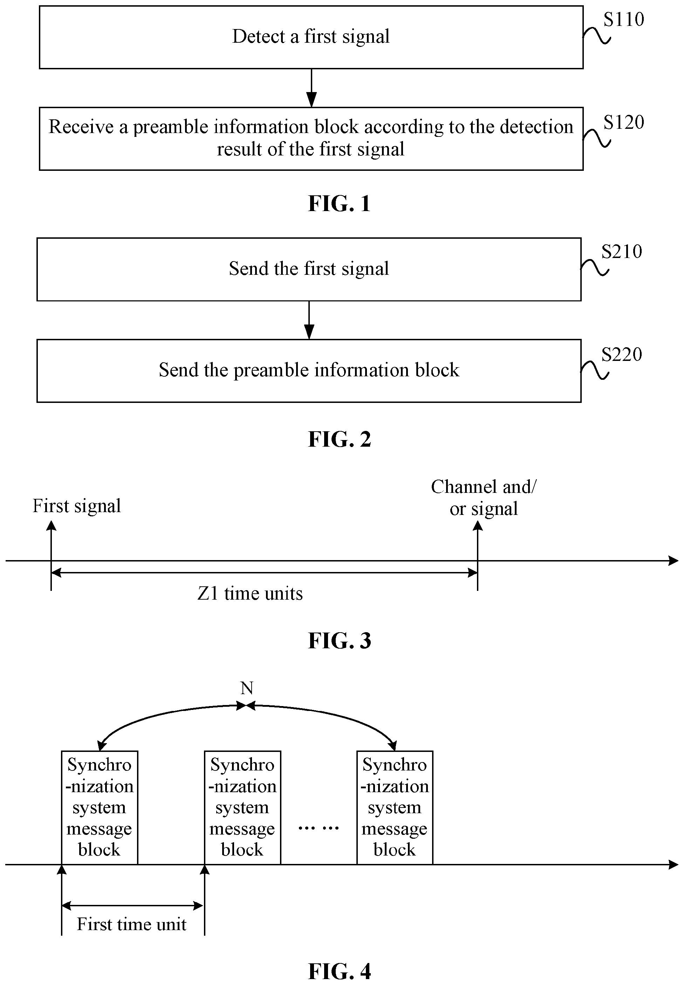

In an embodiment, FIG. 1 is a flowchart of a data transmission method according to an embodiment of the present application. This embodiment may be implemented by a data transmission device. The data transmission device may be a first communication node. For example, the first communication node may be a terminal (for example, user equipment). As shown in FIG. 1, this embodiment includes S110 and S120.

In S110, a first signal is detected.

In S120, a preamble information block is received according to the detection result of the first signal.

The preamble information block includes at least one of the following: a synchronization system message block, a synchronization signal, a primary system message bearer channel, a secondary system message bearer channel, a first reference signal, or a second signal.

In the embodiment, the first signal includes at least one of the following: a binary amplitude keying (2ASK) signal or a signal composed of at least one sequence.

In an actual operation process, the first communication node detects the first signal and receives the preamble information block according to the detection result of the first signal. In the embodiment, the preamble information block includes at least one of the following: a synchronization system message block, a synchronization signal, a primary system message bearer channel, a secondary system message bearer channel, a first reference signal, or a second signal. In the embodiment, if the first communication node detects the first signal, the first communication node receives the preamble information block. The first communication node continuously detects the first signal through the low power consumption receiver, and after the first signal is detected, a host is turned on to receive the preamble information block. In the case where the first communication node does not detect the first signal, the main receiver of the first communication node is in a power-off state, so that the power consumption of the first communication node may be reduced.

In an embodiment, the preamble information block is received in the following manners according to the detection result of the first signal: The first signal is detected, and the preamble information block starts to be received according to first information. The first information is used to determine the receiving position of the preamble information block. In the embodiment, in the case where the first communication node detects the first signal, the first communication node starts to receive the preamble information block according to the first information. In the embodiment, the first information may be obtained by detecting the first signal or may be carried or indicated in the first signal, which is not limited herein.

In an embodiment, the first information includes the frequency domain position where the first signal is detected, the time domain position where the first signal is detected, the frequency domain position indication information carried by the first signal, the time domain position indication information carried by the first signal, and the index information corresponding to the first signal.

In the embodiment, in the case where the first communication node detects the first signal, the first communication node may determine the frequency domain position corresponding to the signal and/or the channel in the preamble information block according to the frequency domain position where the first signal is detected. In an embodiment, in the case where the first communication node detects the first signal, the first communication node may determine the frequency domain position corresponding to the signal and/or the channel in the preamble information block according to the time domain position where the first signal is detected. In an embodiment, in the case where the first communication node detects the first signal, the first communication node may determine the frequency domain position corresponding to the signal and/or the channel in the preamble information block according to the frequency domain position indication information carried by the first signal. In an embodiment, in the case where the first communication node detects the first signal, the first communication node may determine the time domain position corresponding to the signal and/or the channel in the preamble information block according to the time domain position indication information carried by the first signal. In an embodiment, in the case where the first communication node detects the first signal, the first communication node may determine the time domain and/or frequency domain position corresponding to the signal and/or the channel in the preamble information block according to the index information carried by the first signal.

In an embodiment, the preamble information block is received in the following manners according to the detection result of the first signal: The first signal is detected, and the preamble information block is received. The mapping relationship between the first signal and the preamble information block is predefined. In the embodiment, in the case where the first communication node detects the first signal, the first communication node may receive the preamble information block according to the mapping relationship between the preamble information block and the first signal.

In an embodiment, the mapping relationship between the first signal and the preamble information block includes at least one of the following: the mapping relationship between the index of the first signal and the frequency domain position of the preamble information block, the mapping relationship between the index of the first signal and the time domain position of the preamble information block, the mapping relationship between the index of the first signal and the time-frequency domain position of the preamble information block, the mapping relationship between the frequency domain position where the first signal is detected and the frequency domain position of the preamble information block, the mapping relationship between the frequency domain position where the first signal is detected and the time-frequency domain position of the preamble information block, the mapping relationship between the time domain position where the first signal is detected and the time domain position of the preamble information block, or the mapping relationship between the time domain position where the first signal is detected and the time-frequency domain position of the preamble information block.

In an embodiment, after the first communication node detects the first signal from the last time, if the first signal is not detected within preset duration, the first communication node starts to receive the preamble information block. The preset duration may be preconfigured or predefined.

In an embodiment, the preamble information block is received in the following manners according to the detection result of the first signal: The first signal is detected, the preamble information block is received, and it is assumed that the preamble information block is sent periodically. In the embodiment, in the case where the first communication node detects the first signal, the first communication node receives the preamble information block. In the process in which the first communication node receives the preamble information block, it is assumed that a second communication node periodically sends the preamble information block.

In an embodiment, the preamble information block is received, and it is assumed that the preamble information block is sent periodically in at least one of the following manners: In the case where the preamble information block includes the synchronization system message block, the preamble information block is received, and it is assumed that the synchronization system message block is sent periodically; in the case where the preamble information block includes the synchronization system message block and the secondary system message bearer channel, the preamble information block is received, and it is assumed that the synchronization system message block and the secondary system message bearer channel are sent periodically in sequence; in the case where the preamble information block includes the synchronization system message block and the secondary system message bearer channel, the preamble information block is received, and it is assumed that the synchronization system message block and the secondary system message bearer channel are sent at the same period; in the case where the preamble information block includes the synchronization signal and the primary system message bearer channel, the preamble information block is received, and it is assumed that synchronization signal and the primary system message bearer channel are sent periodically in sequence; in the case where the preamble information block includes the synchronization signal and the primary system message bearer channel, the preamble information block is received, and it is assumed that synchronization signal and the primary system message bearer channel are sent at the same period; in the case where the preamble information block includes the synchronization signal and the synchronization system message block, the preamble information block is received, and it is assumed that the synchronization signal and the synchronization system message block are sent periodically in sequence; in the case where the preamble information block includes the synchronization signal and the synchronization system message block, the preamble information block is received, and it is assumed that the synchronization signal and the synchronization system message block are sent at the same period; in the case where the preamble information block includes the synchronization signal, the primary system message bearer channel, and the secondary system message bearer channel, the preamble information block is received, and it is assumed that the synchronization signal, the primary system message bearer channel, and the secondary system message bearer channel are sent periodically in sequence; in the case where the preamble information block includes the synchronization signal, the primary system message bearer channel, and the secondary system message bearer channel, the preamble information block is received, and it is assumed that after the synchronization signal and the primary system message bearer channel are sent at the same period, and the secondary system message bearer channel is sent periodically; or in the case where the preamble information block includes the synchronization signal, the primary system message bearer channel, and the secondary system message bearer channel, the preamble information block is received, and it is assumed that the synchronization signal, the primary system message bearer channel, and the secondary system message bearer channel are sent at the same period.

In an embodiment, the preamble information block is received in the following manners according to the detection result of the first signal: In the case where the preamble information block includes the second signal, the second signal is detected first, and other channels and/or signals in the preamble information block are received according to the detection result of the second signal. In the embodiment, in the case where the preamble information block includes the second signal, if the first communication node detects the second signal, the first communication node starts to receive other channels and/or signals in the preamble information block.

In an embodiment, FIG. 2 is a flowchart of another data transmission method according to an embodiment of the present application. This embodiment may be implemented by a data transmission device. The data transmission device may be a base station. As shown in FIG. 2, this embodiment includes S210 and S220.

In S210, the first signal is sent.

The first signal is used to indicate sending of the preamble information block.

In S220, the preamble information block is sent.

The preamble information block includes at least one of the following: a synchronization system message block, a synchronization signal, a primary system message bearer channel, a secondary system message bearer channel, a first reference signal, or a second signal.

In the embodiment, after the second communication node sends the first signal to the first communication node, the second communication node sends the preamble information block. In the embodiment, after the second communication node sends the first signal, the second communication node sends the preamble information block, so that after the first communication node receives the first signal, the host is turned on to receive the preamble information block, thereby saving the power consumption of the first communication node.

In an embodiment, the second communication node periodically sends the preamble information block.

In an embodiment, the preamble information block includes a synchronization system message block. The preamble information block is sent in the following manner: The synchronization system message block is sent by using a first time unit as a period.

In an embodiment, the preamble information block includes the synchronization system message block and the secondary system message bearer channel. The preamble information block is sent in one of the following manners: After the synchronization system message block is sent by using the first time unit as a period, the secondary system message bearer channel is sent by using a second time unit as a period; or the synchronization system message block and the secondary system message bearer channel are sent by using a third time unit as a period. The start position of the secondary system message bearer channel is determined according to at least one of the following: predefinition, synchronization system message block indication, the number of synchronization system message blocks included in the preamble information block, or the number of secondary system message bearer channels included in the preamble information block.

In an embodiment, in the case where the preamble information block includes the synchronization system message block and the secondary system message bearer channel, after the second communication node first sends the synchronization system message block by using the first time unit as a period, the second communication node then sends the secondary system message bearer channel by using the second time unit as a period. In an embodiment, in the case where the preamble information block includes the synchronization system message block and the secondary system message bearer channel, after the second communication node sends the synchronization system message block by using the first time unit as a period, the second communication node then sends the secondary system message bearer channel by using the second time unit as a period after a period of time. In an embodiment, in the case where the preamble information block includes the synchronization system message block and the secondary system message bearer channel, the second communication node sends the synchronization system message block and the secondary system message bearer channel by using the third time unit as a period. In an embodiment, in the case where the second communication node sends the synchronization system message block and the secondary system message bearer channel by using the third time unit as a period, the start position of the secondary system message bearer channel may be predefined, or may be indicated by the synchronization system message block, or may be determined according to the number of synchronization system message blocks included in the preamble information block, or may be determined according to the number of secondary system message bearer channels included in the preamble information block, or may be determined according to the number of synchronization system message blocks and the number of secondary system message bearer channels included in the preamble information block, which is not limited herein.

In an embodiment, the preamble information block includes the synchronization signal and the primary system message bearer channel. The preamble information block is sent in at least one of the following manners: After the synchronization signal is sent by using a fourth time unit as a period first, the primary system message bearer channel is sent by using a fifth time unit as a period; or the synchronization signal and the primary system message bearer channel are sent by using a sixth time unit as a period. The start position of the primary system message bearer channel is determined according to at least one of the following: predefinition, synchronization signal indication, the number of synchronization signals included in the preamble information block, or the number of primary system message bearer channels included in the preamble information block.

In an embodiment, in the case where the preamble information block includes the synchronization signal and the primary system message bearer channel, after the second communication node sends synchronization information by using the fourth time unit as a period, the primary system message bearer channel is sent by using the fifth time unit as a period. In an embodiment, in the case where the preamble information block includes the synchronization signal and the primary system message bearer channel, after the second communication node sends the synchronization information by using the fourth time unit as a period, the second communication node then sends the primary system message bearer channel by using the fifth time unit as a period after a period of time. In an embodiment, in the case where the preamble information block includes the synchronization signal and the primary system message bearer channel, the second communication node sends the synchronization signal and the primary system message bearer channel by using the sixth time unit as a period. In an embodiment, in the case where the second communication node sends the synchronization signal and the primary system message bearer channel by using the sixth time unit as a period, the start position of the primary system message bearer channel may be predefined, or may be indicated by the synchronization signal, or may be determined according to the number of synchronization signals included in the preamble information block, or may be determined according to the number of primary system message bearer channels included in the preamble information block, or may be determined according to the number of synchronization signals and the number of primary system message bearer channels included in the preamble information block, which is not limited herein.

In an embodiment, the preamble information block includes the synchronization signal and the synchronization system message block. The preamble information block is sent in at least one of the following manners: After the synchronization signal is sent by using a seventh time unit as a period first, the synchronization system message block is sent by using an eighth time unit as a period; or the synchronization signal and the synchronization system message block are sent by using a ninth time unit as a period. The start position of the synchronization system message block is determined according to at least one of the following: predefinition, synchronization signal indication, the number of synchronization signals included in the preamble information block, or the number of synchronization system message blocks included in the preamble information block.

In an embodiment, in the case where the preamble information block includes the synchronization signal and the synchronization system message block, the second communication node sends the synchronization signal to the first communication node by using the seventh time unit as a period, and then the synchronization system message block is sent by using the eighth time unit as a period. In an embodiment, in the case where the preamble information block includes the synchronization signal and the synchronization system message block, after the second communication node sends the synchronization signal to the first communication node by using the seventh time unit as a period, the second communication node then sends the synchronization system message block by using the eighth time unit as a period after a period of time. In an embodiment, in the case where the preamble information block includes the synchronization signal and the synchronization system message block, the second communication node sends the synchronization signal and the synchronization system message block to the first communication node by using the ninth time unit as a period. In an embodiment, in the case where the second communication node sends the synchronization signal and the synchronization system message block to the first communication node by using the ninth time unit as a period, the start position of the synchronization system message block may be predefined, or may be indicated by the synchronization signal, or may be determined according to the number of synchronization signals included in the preamble information block, or may be determined according to the number of synchronization system message blocks included in the preamble information block, or may be determined according to the number of synchronization signals and the number of synchronization system message blocks included in the preamble information block, which is not limited herein.

In an embodiment, the preamble information block includes the synchronization signal, the primary system message bearer channel, and the secondary system message bearer channel. The preamble information block is sent in at least one of the following manners: After the synchronization signal is sent by using a tenth time unit as a period first, and the primary system message bearer channel is sent by using an eleventh time unit as a period, the secondary system message bearer channel is sent by using a twelfth time unit as a period; after the synchronization signal and the primary system message bearer channel are sent by using a thirteenth time unit as a period first, the secondary system message bearer channel is sent by using a fourteenth time unit as a period, where the start position of the primary system message bearer channel is determined according to at least one of the following: the number of synchronization signals included in the preamble information block, the number of primary system message bearer channels included in the preamble information block, synchronization signal indication, or predefinition; or the synchronization signal, the primary system message bearer channel, and the secondary system message bearer channel are sent by using a fifteenth time unit as a period, where the start position of the primary system message bearer channel is determined according to at least one of the following: the number of synchronization signals included in the preamble information block, the number of primary system message bearer channels included in the preamble information block, synchronization signal indication, or predefinition. The start position of the secondary system message bearer channel is determined according to at least one of the following: the number of synchronization signals included in the preamble information block, the number of primary system message bearer channels included in the preamble information block, the number of secondary system message bearer channels included in the preamble information block, synchronization signal indication, or predefinition.

In an embodiment, in the case where the preamble information block includes the synchronization signal, the primary system message bearer channel, and the secondary system message bearer channel, the second communication node may first send the synchronization signal by using the tenth time unit as a period, and then the primary system message bearer channel is sent by using the eleventh time unit as a period. Finally, the secondary system message bearer channel is sent by using the twelfth time unit as a period. In an embodiment, in the case where the preamble information block includes the synchronization signal, the primary system message bearer channel, and the secondary system message bearer channel, the second communication node may first send the synchronization signal by using the tenth time unit as a period, and the second communication node then sends the primary system message bearer channel by using the eleventh time unit as a period after a period of time. Finally, the second communication node sends the secondary system message bearer channel by using the twelfth time unit as a period after a period of time. In an embodiment, in the case where the preamble information block includes the synchronization signal, the primary system message bearer channel, and the secondary system message bearer channel, the second communication node may first send the synchronization signal by using the tenth time unit as a period, and the second communication node then sends the primary system message bearer channel by using the eleventh time unit as a period after a period of time. Finally, the secondary system message bearer channel is sent by using the twelfth time unit as a period. In an embodiment, in the case where the preamble information block includes the synchronization signal, the primary system message bearer channel, and the secondary system message bearer channel, after the second communication node may first send the synchronization signal by using the tenth time unit as a period first, the primary system message bearer channel is sent by using the eleventh time unit as a period. Finally, the second communication node sends the secondary system message bearer channel by using the twelfth time unit as a period after a period of time.

In an embodiment, in the case where the preamble information block includes the synchronization signal, the primary system message bearer channel, and the secondary system message bearer channel, the second communication node may first send the synchronization signal and the primary system message bearer channel by using the thirteenth time unit as a period, and then the secondary system message bearer channel is sent by using the fourteenth time unit as a period. In an embodiment, in the case where the preamble information block includes the synchronization signal, the primary system message bearer channel, and the secondary system message bearer channel, the second communication node may first send the synchronization signal and the primary system message bearer channel by using the thirteenth time unit as a period, and the second communication node then sends the secondary system message bearer channel by using the fourteenth time unit as a period after a period of time. In an embodiment, in the case where the second communication node first sends the synchronization signal and the primary system message bearer channel by using the thirteenth time unit as a period, and then the secondary system message bearer channel is sent by using the fourteenth time unit as a period, the start position of the primary system message bearer channel may be predefined, or may be indicated by the synchronization signal, or may be determined according to the number of synchronization signals included in the preamble information block, or may be determined according to the number of primary system message bearer channels included in the preamble information block, or may be determined according to the number of synchronization signals and the number of primary system message bearer channels included in the preamble information block, which is not limited herein.

In an embodiment, in the case where the preamble information block includes the synchronization signal, the primary system message bearer channel, and the secondary system message bearer channel, the second communication node may directly send the synchronization signal, the primary system message bearer channel, and the secondary system message bearer channel to the first communication node by using the fifteenth time unit as a period. In an embodiment, in the case where the second communication node sends the synchronization signal, the primary system message bearer channel, and the secondary system message bearer channel to the first communication node by using the fifteenth time unit as a period, the start position of the primary system message bearer channel may be predefined, or may be indicated by the synchronization signal, or may be determined according to the number of synchronization signals included in the preamble information block, or may be determined according to the number of primary system message bearer channels included in the preamble information block, or may be determined according to the number of synchronization signals and the number of primary system message bearer channels included in the preamble information block, which is not limited herein. In an embodiment, in the case where the second communication node sends the synchronization signal, the primary system message bearer channel, and the secondary system message bearer channel to the first communication node by using the fifteenth time unit as a period, the start position of the secondary system message bearer channel may be predefined, or may be indicated by the synchronization signal, or may be determined according to at least one of the number of synchronization signals, the number of primary system message bearer channels, or the number of secondary system message bearer channels included in the preamble information block, which is not limited herein.

In an embodiment, in the case where the synchronization signal includes a first synchronization sub-signal and a second synchronization sub-signal, the synchronization signal is periodically sent in the following manners: After the first synchronization sub-signal is continuously sent first, the second synchronization sub-signal is periodically sent; or after the first synchronization sub-signal is sent at a first sub-period, the second synchronization sub-signal is sent at a second sub-period. In the embodiment, the second communication node first continuously sends the first synchronization sub-signal, and the second communication node then periodically sends the second synchronization sub-signal.

In an embodiment, the preamble information block includes the first reference signal. The preamble information block is sent in the following manner: The first reference signal is sent by using a sixteenth time unit as a period. In the embodiment, the first reference signal is used as a reference signal for decoding and other auxiliary operations. For example, the first reference signal may include but is not limited to a tracking reference signal (TRS).

In an embodiment, the preamble information block is sent in the following manner: The preamble information block is sent according to the first information. The first information is used to indicate the sending position of the preamble information block. In the embodiment, after the second communication node sends the first signal, the preamble information block is sent to the first communication node according to the first information.

In an embodiment, the first information includes the frequency domain position where the first signal is sent, the time domain position where the first signal is sent, frequency domain position indication information, time domain position indication information, and index information. In an embodiment, after the second communication node sends the first signal, the second communication node may determine the corresponding frequency domain position where the signal and/or the channel in the preamble information block is sent according to the frequency domain position where the first signal is sent. In an embodiment, after the second communication node sends the first signal, the second communication node may determine the corresponding time domain position where the signal and/or the channel in the preamble information block is sent according to the time domain position where the first signal is sent. In an embodiment, after the second communication node sends the first signal, the second communication node may determine the corresponding frequency domain position where the signal and/or the channel in the preamble information block is sent according to the frequency domain position indication information carried by the first signal. In an embodiment, after the second communication node sends the first signal, the second communication node may determine the corresponding time domain position where the signal and/or the channel in the preamble information block is sent according to the time domain position indication information carried by the first signal. In an embodiment, after the second communication node sends the first signal, the second communication node may determine the corresponding time domain and/or frequency domain position where the signal and/or the channel in the preamble information block is sent according to the index information carried by the first signal.

In an embodiment, the preamble information block is sent in the following manner: The preamble information block corresponding to the first signal is sent according to the mapping relationship between the first signal and the preamble information block. In the embodiment, the mapping relationship between the first signal and the preamble information block is predefined. In the embodiment, after the second communication node sends the first signal, the second communication node may start to send the corresponding preamble information block according to the mapping relationship between the preamble information block and the first signal.

In an embodiment, the mapping relationship between the first signal and the preamble information block includes at least one of the following: the mapping relationship between the index of the first signal and the frequency domain position of the preamble information block, the mapping relationship between the index of the first signal and the time domain position of the preamble information block, the mapping relationship between the index of the first signal and the time-frequency domain position of the preamble information block, the mapping relationship between the frequency domain position where the first signal is detected and the frequency domain position of the preamble information block, the mapping relationship between the frequency domain position where the first signal is detected and the time-frequency domain position of the preamble information block, the mapping relationship between the time domain position where the first signal is detected and the time domain position of the preamble information block, or the mapping relationship between the time domain position where the first signal is detected and the time-frequency domain position of the preamble information block.

In an embodiment, the first signal includes at least one of the following: a binary amplitude keying signal or a signal composed of at least one sequence.

In an embodiment, in the case where the preamble information block includes the second signal, the preamble information block is also sent in one of the following manners: The second signal is sent first, and then other channels and/or signals in the preamble information block are sent; the first signal indicates that a cell state is on, the second signal is sent, and then other channels and/or signals in the preamble information block are sent; or the first signal indicates that the cell state is off, the preamble information block is not sent.

In the embodiment, whether the preamble information block is sent may be jointly determined according to the first signal and the second signal. In the embodiment, in the case where the preamble information block includes the second signal, the second signal is sent first, and then other channels and/or signals in the preamble information block are sent, that is, the first signal triggers the sending of the second signal, and the second signal triggers the sending of other channels and/or information in the preamble information block.

In an embodiment, for example, the first communication node is a terminal, the second communication node is a base station, and the first signal is a 2ASK signal or a signal composed of at least one sequence. The sequence may be a ZC sequence, a pseudo-noise (PN) sequence, an M sequence, or a computer searched sequence. The receiving process of the preamble information block is described.

Example one: The terminal detects the first signal at frequency domain position f1, and the terminal starts to receive the preamble information block at frequency domain position f1.

Example two: The terminal detects the first signal at frequency domain position f1, and the terminal starts to receive the preamble information block in a frequency domain (f1 - k1, f1 + k1) range. The value of k1 may be predetermined.

Example three: The terminal detects the first signal at frequency domain position f1, and the terminal starts to receive the preamble information block by using f1 as a reference point.

Example four: The terminal detects the first signal at time domain position t1, and the terminal starts to receive the preamble information block at time domain position t1 + k2. K2 is determined by one of the following: one or more predetermined values, a terminal capability, the frequency domain position where the first signal is located, or the frequency domain position where the preamble information block is located.

Example five: The terminal detects the first signal. The frequency domain position indication information carried by the first signal is f2, and the terminal may start to receive the preamble information block at frequency domain position f2.

Example six: The terminal detects the first signal. The frequency domain position indication information carried by the first signal is frequency domain position f2, and the terminal may start to receive the preamble information block in a frequency domain (f2 - k3, f2 + k3) range. The value of k3 may be predetermined. When the terminal detects the first signal, the first signal is a signal composed of at least one sequence.

Example seven: The terminal detects the first signal at frequency domain position f1. The frequency domain position indication information carried by the first signal is frequency domain position f2, and the terminal starts to receive the preamble information block in a frequency domain (f1 - f2, f1 + f2) or (f2 - f1, f2 + f1) range.

Example eight: The terminal detects the first signal at time domain position t1. The time domain position indication information carried by the first signal is time domain position t2, and the terminal starts to receive the preamble information block at time domain position t1 + k2.

Example nine: The terminal detects the first signal. The information carried in the first signal is index information, and the terminal determines the position at which the terminal starts to receive the preamble information block according to the relationship between the index information and the index and the time domain position of the preamble information block. For example, as shown in Table 1, when the index in the index information is 1, the terminal starts to receive the preamble information block after m1 milliseconds after the terminal receives the first signal. In the case where an index signal is 2, the terminal starts to receive the preamble information block after m2 milliseconds after the terminal receives the first signal, and so on.

**Table 1**

| Index Information | Time Domain Position of the Preamble Information Block |
|---|---|
| 1 | m1 milliseconds after the first signal |
| 2 | m2 milliseconds after the first signal |
| ...... | ...... |
| L | ml milliseconds after the first signal |

Example ten: The terminal detects the first signal. The information carried in the first signal is the index information, and the terminal determines the position at which the terminal starts to receive the preamble information block according to the relationship between the index information and the index and the frequency domain position of the preamble information block. For example, as shown in Table 2, in the case where the index in the index information is 1, after the terminal receives the first signal, the terminal starts to receive the preamble information block at frequency domain position f1. In the case where the index information is 2, after the terminal receives the first signal, the terminal starts to receive the preamble information block at frequency domain position f2.

**Table 2**

| Index Information | Frequency Domain Position of the Preamble Information Block |
|---|---|
| 1 | f1 |
| 2 | f2 |
| ...... | ...... |
| L | fl |

Example eleven: The terminal detects the first signal. The information carried in the first signal is the index information, and the terminal determines the position at which the terminal starts to receive the preamble information block according to the relationship between the index information and the index and the time-frequency domain position of the preamble information block. For example, as shown in Table 3, in the case where the index in the index information is 1, after the terminal receives the first signal, the terminal starts to receive the preamble information block at frequency domain position f1; or the terminal starts to receive the preamble information block after m1 milliseconds after the terminal receives the first signal. In the case where the index information is 2, after the terminal receives the first signal, the terminal starts to receive the preamble information block at frequency domain position f2; or the terminal starts to receive the preamble information block after m2 milliseconds after the terminal receives the first signal, and so on.

**Table 3**

| Index Information | Frequency Domain Position of the Preamble Information Block | Time Domain Position of the Preamble Information Block |
|---|---|---|
| 1 | f1 | m1 milliseconds after the first signal |
| 2 | f2 | m2 milliseconds after the first signal |
| ...... | ...... | ...... |
| L | fl | ml milliseconds after the first signal |

Example twelve: The terminal detects the first signal at frequency domain position f1. The terminal starts to receive the preamble information block according to the predefined mapping relationship between the first signal and the preamble information block. The relationship between the first signal and the preamble information block is the relationship between the frequency domain position of the first signal and the time-frequency domain position of the preamble information block. As shown in Table 4 below, the terminal starts to receive the preamble information block after m1 milliseconds after the frequency domain position f1 and the time domain position are first signals.

**Table 4**

| Frequency Domain Position of the First Signal | Frequency Domain Position of the Preamble Information Block | Time Domain Position of the Preamble Information Block |
|---|---|---|
| f1 | f1 | m1 milliseconds after the first signal |
| f2 | f2 | m2 milliseconds after the first signal |
| ...... | ...... | ...... |
| fl | fl | ml milliseconds after the first signal |

Example thirteen: The terminal detects the first signal. However, no first signal is detected within Z1 time units after the first signal is detected, and then the terminal starts to receive the preamble information block. When the terminal detects the first signal, it is assumed that the first signal is a 2ASK signal. FIG. 3 is a configuration diagram of the receiving position between a first signal and a preamble information block according to an embodiment of the present application. As shown in FIG. 3, after the terminal receives the first signal, if no first signal is detected within Z1 time units, the terminal starts to receive the preamble information block. For example, the first signal is received by a separate module, and the preamble information block is received by turning on the host.

Example fourteen: The terminal does not detect a first signal within Z2 time units after the terminal is powered on. The terminal starts to receive the preamble information block. When the terminal detects the first signal, it is assumed that the first signal is a 2ASK signal. For example, the first signal is received by a separate module, and the preamble information block is received by turning on the host.

In an embodiment, when the terminal receives the preamble information block, it is assumed that one or more channels or signals in the preamble information block are sent periodically.

In an embodiment, when the preamble information block includes the second signal, the terminal first detects the second signal and determines the reception of other channels and/or signals in the preamble information block according to the detection result of the second signal.

In an embodiment, the first communication node is a terminal, and the second communication node is a base station. When the preamble information block includes one or more of N synchronization system message blocks, K synchronization signals, L primary system message bearer channels, M secondary system message bearer channels, and S first reference signals, the relationship between sending the first signal by the base station and sending the preamble information block by the base station is described.

Example one: FIG. 4 is a transmission diagram of a preamble information block according to an embodiment of the present application. As shown in FIG. 4, in the case where the preamble information block includes N synchronization system message blocks, the base station sends the N synchronization system message blocks by using the first time unit as a period.

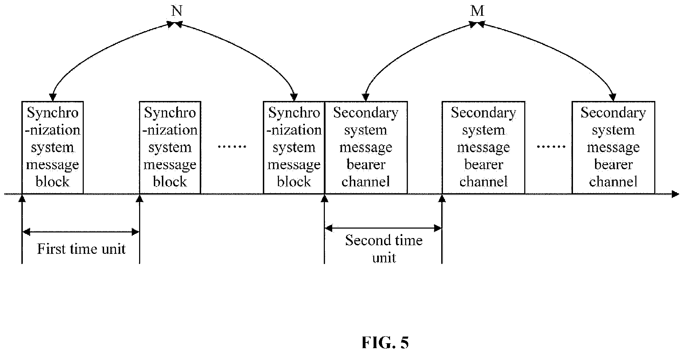

Example two: FIG. 5 is a transmission diagram of another preamble information block according to an embodiment of the present application. As shown in FIG. 5, in the case where the preamble information block includes N synchronization system message blocks and M secondary system message bearer channels, after the base station sends the N synchronization system message blocks by using the first time unit as a period, the base station sends the M secondary system message bearer channels by using the second time unit as a period.

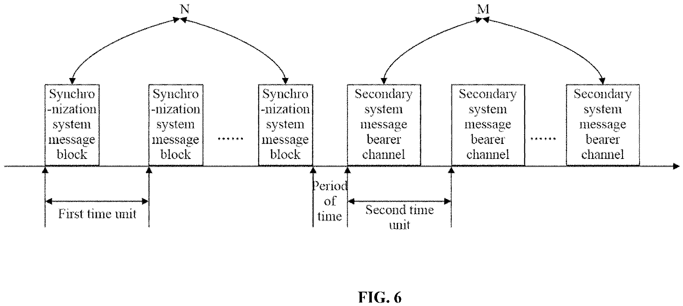

Example three: FIG. 6 is a transmission diagram of another preamble information block according to an embodiment of the present application. As shown in FIG. 6, in the case where the preamble information block includes N synchronization system message blocks and M secondary system message bearer channels, after the base station sends the N synchronization system message blocks by using the first time unit as a period, the base station sends the M secondary system message bearer channels by using the second time unit as a period. After the N synchronization system message blocks, the M secondary system message bearer channels are sent after a period of time.

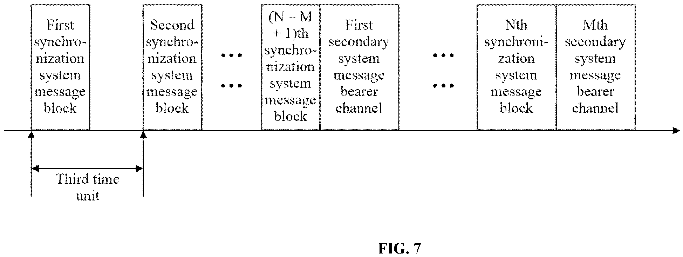

Example four: FIG. 7 is a transmission diagram of another preamble information block according to an embodiment of the present application. As shown in FIG. 7, in the case where the preamble information block includes N synchronization system message blocks and M secondary system message bearer channels, the base station sends the synchronization system message block and the secondary system message bearer channel by using the third time unit as a period. The secondary system message bearer channel starts to be sent after the (N - M + 1)th synchronization system message block.

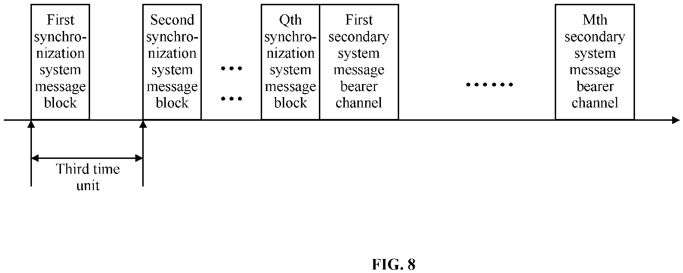

Example five: FIG. 8 is a transmission diagram of another preamble information block according to an embodiment of the present application. As shown in FIG. 8, in the case where the preamble information block includes N synchronization system message blocks and M secondary system message bearer channels, the base station sends the synchronization system message block and the secondary system message bearer channel by using the third time unit as a period. The start position of the secondary system message bearer channel may be after the Qth synchronization system message. The value of Q may be preset. Alternatively, the start position of the secondary system message bearer channel is indicated by the synchronization system message block.

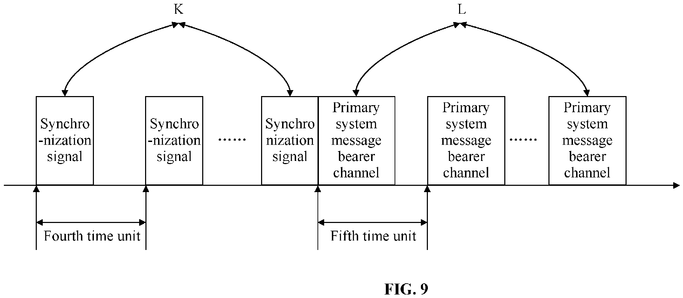

Example six: FIG. 9 is a transmission diagram of another preamble information block according to an embodiment of the present application. As shown in FIG. 9, in the case where the preamble information block includes K synchronization signals and L primary system message bearer channels, after the base station sends the K synchronization signals by using the fourth time unit as a period, the L primary system message bearer channels are sent by using the fifth time unit as a period.

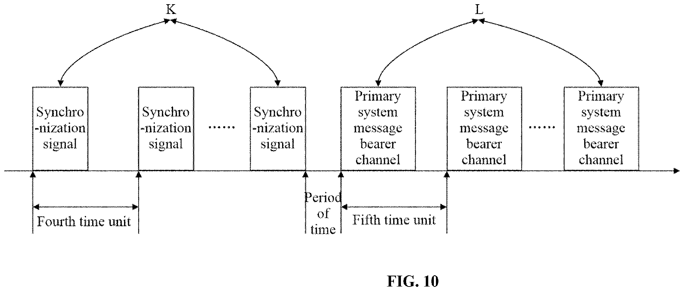

Example seven: FIG. 10 is a transmission diagram of another preamble information block according to an embodiment of the present application. As shown in FIG. 10, in the case where the preamble information block includes K synchronization signals and L primary system message bearer channels, after the base station sends the K synchronization signals by using the fourth time unit as a period, the base station then sends the L primary system message bearer channels by using the fifth time unit as a period after a period of time.

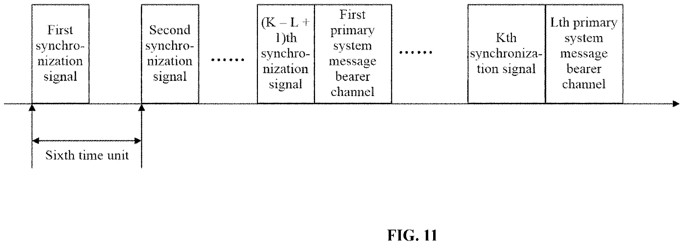

Example eight: FIG. 11 is a transmission diagram of another preamble information block according to an embodiment of the present application. As shown in FIG. 11, in the case where the preamble information block includes K synchronization signals and L primary system message bearer channels, the base station sends the synchronization signal and the primary system message bearer channel by using the sixth time unit as a period. The primary system message bearer channel starts to be sent after the (K - L + 1)th synchronization signal. Alternatively, the start position of the primary system message bearer channel is the position after the Tth synchronization signal. The value of T may be predetermined or may be carried by the synchronization signal.

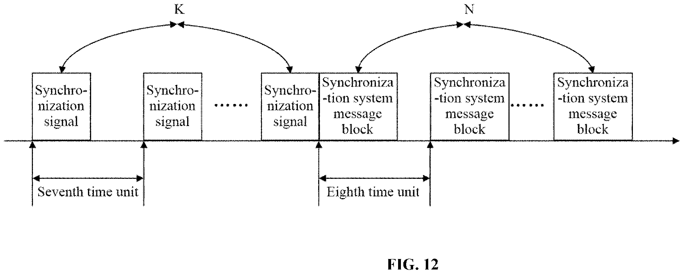

Example nine: FIG. 12 is a transmission diagram of another preamble information block according to an embodiment of the present application. As shown in FIG. 12, in the case where the preamble information block includes K synchronization signals and N synchronization system message blocks, after the base station sends the K synchronization signals by using the seventh time unit as a period, N synchronization system message blocks are sent by using the eighth time unit as a period.

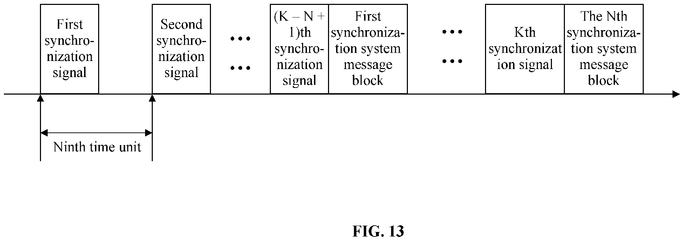

Example ten: FIG. 13 is a transmission diagram of another preamble information block according to an embodiment of the present application. As shown in FIG. 13, in the case where the preamble information block includes K synchronization signals and N synchronization system message blocks, the base station sends the synchronization signal and the synchronization system message block to the first communication node by using the ninth time unit as a period. The synchronization system message block may start to be sent from the (K - N + 1)th synchronization signal, or the synchronization system message block may be the position after P synchronization signals. The value of P may be predefined or may be indicated by the synchronization signal.

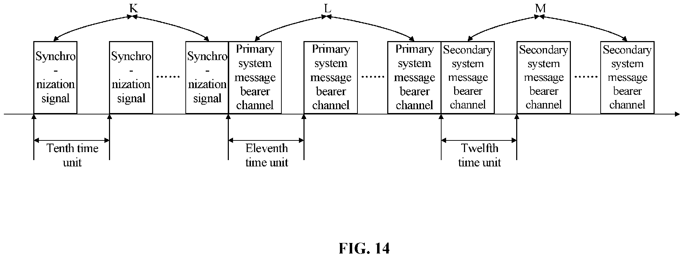

Example nine: FIG. 14 is a transmission diagram of another preamble information block according to an embodiment of the present application. As shown in FIG. 14, in the case where the preamble information block includes K synchronization signals, L primary system message bearer channels, and M secondary system message bearer channels, after the base station sends the K synchronization signals by using the tenth time unit as a period, the L primary system message bearer channels are sent by using the eleventh time unit as a period, and then the M secondary system message bearer channels are sent by using the twelfth time unit as a period.

Example ten: In the case where the preamble information block includes K synchronization signals, L primary system message bearer channels, and M secondary system message bearer channels, after the base station sends the K synchronization signals by using the tenth time unit as a period, the L primary system message bearer channels are sent by using the eleventh time unit as a period, and then the M secondary system message bearer channels are sent by using the twelfth time unit as a period. There is an interval between the synchronization signal and the primary system message bearer channel. The interval value may be predefined or may be carried by a synchronization channel. There is an interval between the primary system message bearer channel and the secondary system message bearer channel. The interval value may be predefined or bore by the primary system message bearer channel.

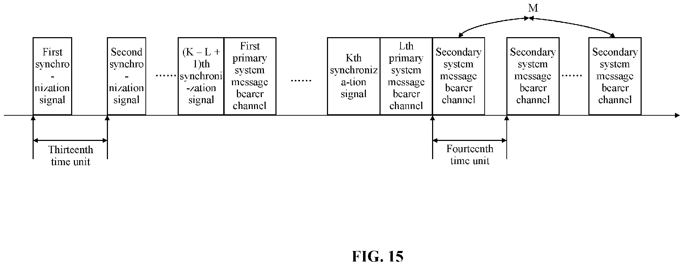

Example eleven: FIG. 15 is a transmission diagram of another preamble information block according to an embodiment of the present application. As shown in FIG. 15, when the preamble information block includes K synchronization signals, L primary system message bearer channels, and M secondary system message bearer channels, after the base station sends the synchronization signal and the primary system message bearer channel by using the thirteenth time unit as a period, the M secondary system message bearer channels are sent by using the fourteenth time unit as a period. The primary system message bearer channel starts to be sent from the (K - L + 1)th synchronization signal.

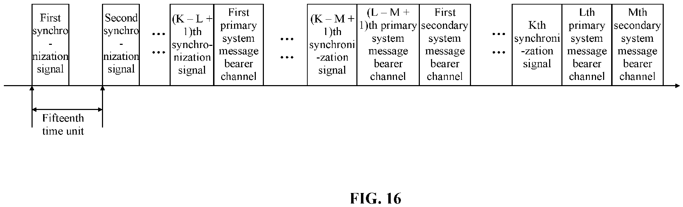

Example eleven: FIG. 16 is a transmission diagram of another preamble information block according to an embodiment of the present application. As shown in FIG. 16, in the case where the preamble information block includes K synchronization signals, L primary system message bearer channels, and M secondary system message bearer channels, the base station sends the synchronization signal, the primary system message bearer channel, and the M secondary system message bearer channels by using the fifteenth time unit as a period. The primary system message bearer channel starts to be sent from the (K - L + 1)th synchronization signal. The secondary system message bearer channel starts to be sent from the (L - M + 1)th primary system message bearer channel. Alternatively, the start positions of the primary system message bearer channel and the secondary system message bearer channel are predetermined.

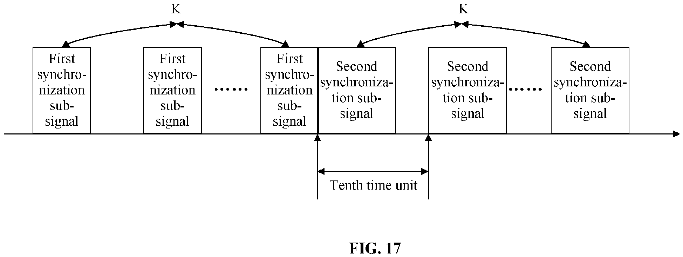

FIG. 17 is a transmission diagram of another preamble information block according to an embodiment of the present application. As shown in FIG. 17, in examples one to eleven above, in the case where the preamble information block includes K synchronization signals, and a synchronization signal is composed of the first synchronization sub-signal and the second synchronization sub-signal, the base station periodically sends the synchronization signal in the following manner: After the base station first sends K first synchronization sub-signals, the base station then periodically sends the second synchronization sub-signal.

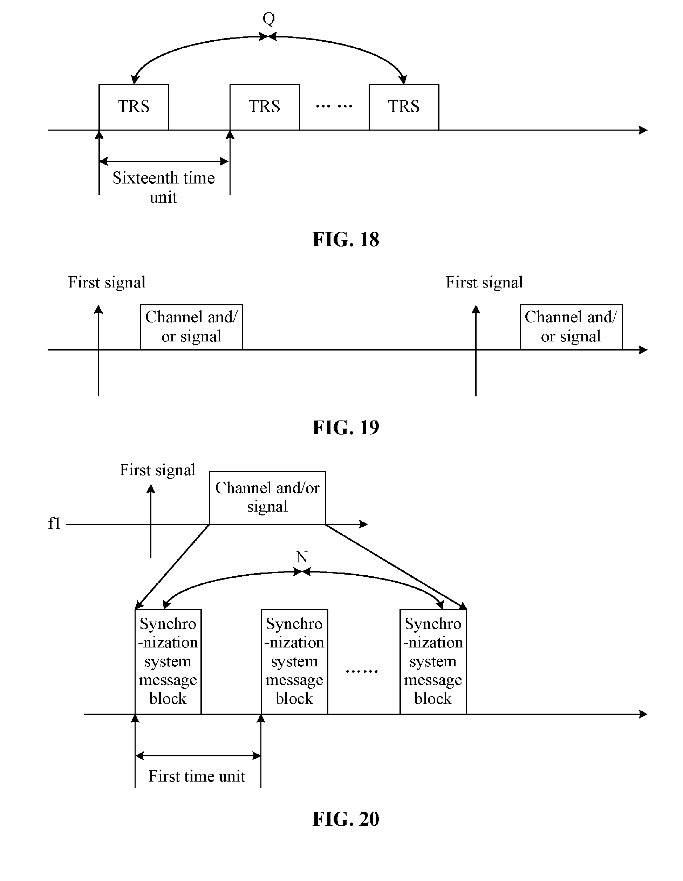

Example twelve: FIG. 18 is a transmission diagram of another preamble information block according to an embodiment of the present application. As shown in FIG. 18, in the case where the preamble information block includes Q TRSs, the base station sends the Q TRSs by using the sixteenth time unit as a period.

In an embodiment, in the case where the base station sends the first signal, the base station sends the first signal by 2ASK modulation.

In an embodiment, the base station sends the preamble information block in the following manner: The base station sends the preamble information block according to the first information. The first information is determined by the first signal.

In an embodiment, in the case where the first information includes the frequency domain position where the first signal is sent, the base station sends the preamble information block according to the first information in the following manner: The base station determines the corresponding frequency domain position where the preamble information block is sent according to at least the frequency domain position where the first signal is sent.

In an embodiment, in the case where the first information includes the time domain position where the first signal is sent, the base station sends the preamble information block according to the first information in the following manner: The base station determines the corresponding time domain position where the preamble information block is sent according to at least the time domain position where the first signal is sent.

In an embodiment, in the case where the first information includes the frequency domain position indication information carried by the first signal, the base station sends the preamble information block according to the first information in the following manner: The base station determines the corresponding frequency domain position where the preamble information block is sent according to at least the frequency domain position indication information.

In an embodiment, in the case where the first information includes the time domain position indication information carried by the first signal, the base station sends the preamble information block according to the first information in the following manner: The base station determines the corresponding time domain position where the preamble information block is sent according to at least the time domain position indication information.

In an embodiment, in the case where the first information includes the index information corresponding to the first signal, the base station sends the preamble information block according to the first information in the following manner: The base station determines the corresponding time domain and/or frequency domain position where the preamble information block is sent according to at least the index information.

In an embodiment, the base station may determine the sending of the preamble information block according to the mapping relationship between the first signal and the preamble information block. The relationship between the first signal and the preamble information block may be predefined.

In an embodiment, the mapping relationship between the first signal and the preamble information block includes one or more of the following relationships: the relationship between the index of the first signal and the frequency domain position corresponding to the preamble information block, or the relationship between the index of the first signal and the time domain position corresponding to the preamble information block, or the relationship between the index of the first signal and the time-frequency domain position corresponding to the preamble information block, or the relationship between the frequency domain position of the first signal and the frequency domain position corresponding to the preamble information block, or the relationship between the frequency domain position of the first signal and the time-frequency domain position corresponding to the preamble information block, or the relationship between the time domain position of the first signal and the time domain position corresponding to the preamble information block, or the relationship between the time domain position of the first signal and the time-frequency domain position corresponding to the preamble information block.

In an embodiment, FIG. 19 is a configuration diagram of the sending position between a first signal and a preamble information block according to an embodiment of the present application. As shown in FIG. 19, after the base station sends the first signal, the base station starts to send the preamble information block. The preamble information block is sent only after the first signal is sent.

In an embodiment, FIG. 20 is another configuration diagram of the sending position between a first signal and a preamble information block according to an embodiment of the present application. As shown in FIG. 20, after the base station sends the first signal, the base station may determine the sending of the preamble information block according to the first information corresponding to the first signal. The first information is the frequency domain position where the first signal is sent, and the preamble information block is N synchronization system message blocks. It is assumed that the base station sends the first signal at frequency point f1, and then the base station sends the N synchronization system message blocks at frequency point f1 by using the first time unit as a period.

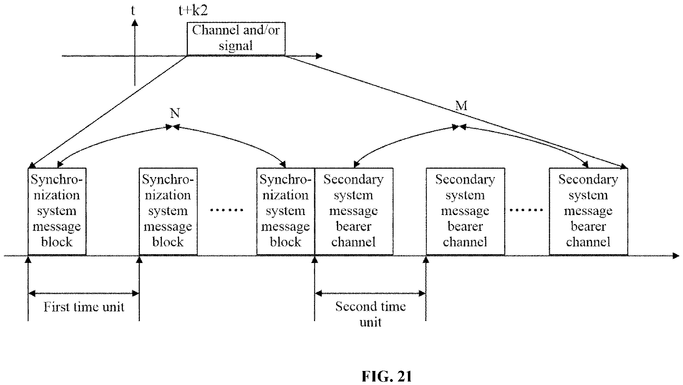

In an embodiment, FIG. 21 is another configuration diagram of the sending position between a first signal and a preamble information block according to an embodiment of the present application. As shown in FIG. 21, after the base station sends the first signal, the base station may determine the sending of the preamble information block according to the first information corresponding to the first signal. The first information is the time domain position where the first signal is sent, and the preamble information block includes N synchronization system message blocks and M secondary system message bearer channels. The base station sends the first signal at time domain position t. After the base station sends the N synchronization system message blocks at time domain position t + k2 by using the first time unit as a period, the base station then sends the M secondary system message bearer channels by using the second time unit as a period.

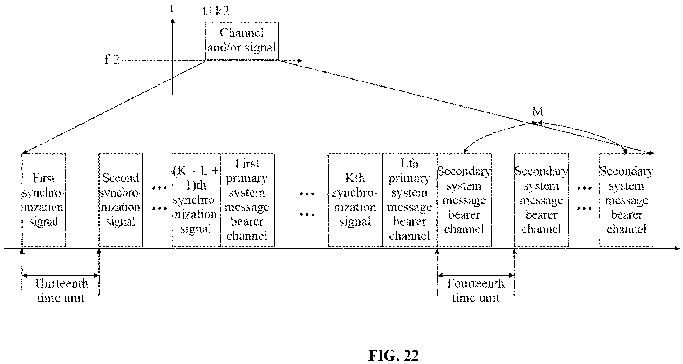

In an embodiment, FIG. 22 is another configuration diagram of the sending position between a first signal and a preamble information block according to an embodiment of the present application. As shown in FIG. 22, after the base station sends the first signal, the sending of the preamble information block is determined according to the relationship between the first signal and the preamble information block. The mapping relationship between the first signal and the preamble information block is the relationship between the frequency domain position of the first signal and the time-frequency domain position corresponding to the preamble information block. Table 4 shows K synchronization signals, L primary system message bearer channels, and M secondary system message bearer channels. The base station sends the first signal at frequency domain position f2. After the base station sends the synchronization signal and the primary system message bearer channel at time domain position t + m2 and the time domain position f2 by using the thirteenth time unit as a period, the M secondary system message bearer channels are sent by using the fourteenth time unit as a period. The primary system message bearer channel starts to be sent from the (K - L + 1)th synchronization signal, as shown in FIG. 22.

When the primary system message bearer channel given in FIG. 22 starts to be sent from the (K - L + 1)th synchronization signal, the time domain positions of the two are just a diagram. The two may also be sent using other time domain positions. For example, it is assumed that the synchronization signal is composed of two synchronization sub-signals, namely the first synchronization sub-signal and the second synchronization sub-signal. Then the time domain position relationship of the two may be the first synchronization sub-signal, a primary system message bearer signal, and the second synchronization sub-signal. Alternatively, the synchronization signal is located on the primary system message bearer channel.

In the preceding embodiments, a time unit is the time domain length composed of one or more of ns slots, nsf subframes, and nf radio frames.

In an embodiment, the first communication node is a terminal, and the second communication node is a base station. When the preamble information block includes one or more of a second signal, N synchronization system message blocks, K synchronization signals, L primary system message bearer channels, M secondary system message bearer channels, and S first reference signals. The relationship between sending the first signal by the base station and sending the preamble information block by the base station is described.

Example one: The second signal is sent first, and then other channels and/or signals in the preamble information block are sent. Example two: When the first signal indicates that a cell state is on, the second signal is sent, and then other channels and/or signals in the preamble information block are sent. Example three: The first signal indicates that the cell state is off, and the preamble information block is not sent.

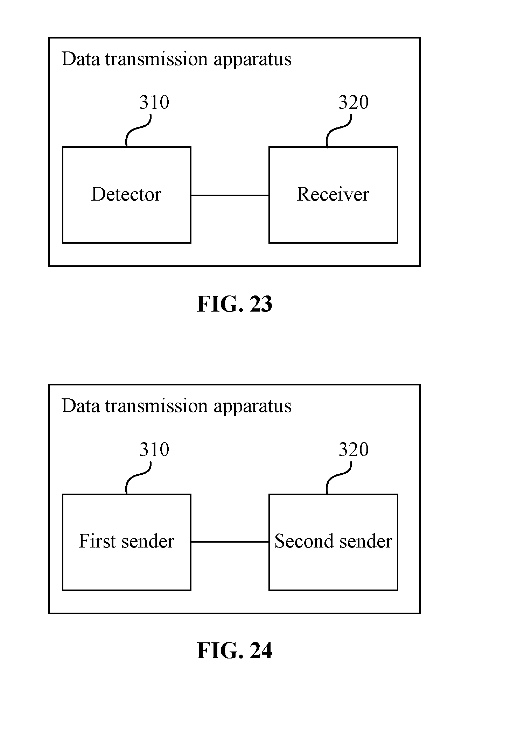

In an embodiment, FIG. 23 is a block diagram of a data transmission apparatus according to an embodiment of the present application. This embodiment may be implemented by a data transmission device. The data transmission device may be a terminal (for example, user equipment). As shown in FIG. 23, this embodiment includes a detector 310 and a receiver 320.

The detector 310 is configured to detect the first signal.

The receiver 320 is configured to receive the preamble information block according to the detection result of the first signal.

The preamble information block includes at least one of the following: a synchronization system message block, a synchronization signal, a primary system message bearer channel, a secondary system message bearer channel, a first reference signal, or a second signal.

In an embodiment, the receiver 320 is configured to detect the first signal and start to receive the preamble information block according to the first information. The first information is used to determine the receiving position of the preamble information block.

In an embodiment, the first information includes the frequency domain position where the first signal is detected, the time domain position where the first signal is detected, the frequency domain position indication information carried by the first signal, the time domain position indication information carried by the first signal, and the index information corresponding to the first signal.

In an embodiment, the receiver 320 is configured to detect the first signal and receive the preamble information block. The mapping relationship between the first signal and the preamble information block is predefined.

In an embodiment, the mapping relationship between the first signal and the preamble information block includes at least one of the following: the mapping relationship between the index of the first signal and the frequency domain position of the preamble information block, the mapping relationship between the index of the first signal and the time domain position of the preamble information block, the mapping relationship between the index of the first signal and the time-frequency domain position of the preamble information block, the mapping relationship between the frequency domain position where the first signal is detected and the frequency domain position of the preamble information block, the mapping relationship between the frequency domain position where the first signal is detected and the time-frequency domain position of the preamble information block, the mapping relationship between the time domain position where the first signal is detected and the time domain position of the preamble information block, or the mapping relationship between the time domain position where the first signal is detected and the time-frequency domain position of the preamble information block.

In an embodiment, the first signal includes at least one of the following: a binary amplitude keying signal or a signal composed of at least one sequence.

In an embodiment, the preamble information block is received in the manners below according to the detection result of the first signal.

The first signal is detected, the preamble information block is received, and it is assumed that the preamble information block is sent periodically.

In an embodiment, the preamble information block is received, and it is assumed that the preamble information block is sent periodically in at least one of the following manners: In the case where the preamble information block includes the synchronization system information block, the preamble information block is received, and it is assumed that the synchronization system message block is sent periodically; in the case where the preamble information block includes the synchronization system message block and the secondary system message bearer channel, the preamble information block is received, and it is assumed that the synchronization system message block and the secondary system message bearer channel are sent periodically in sequence; in the case where the preamble information block includes the synchronization system message block and the secondary system message bearer channel, the preamble information block is received, and it is assumed that the synchronization system message block and the secondary system message bearer channel are sent at the same period; in the case where the preamble information block includes the synchronization signal and the primary system message bearer channel, the preamble information block is received, and it is assumed that synchronization signal and the primary system message bearer channel are sent periodically in sequence; in the case where the preamble information block includes the synchronization signal and the primary system message bearer channel, the preamble information block is received, and it is assumed that synchronization signal and the primary system message bearer channel are sent at the same period; in the case where the preamble information block includes the synchronization signal and the synchronization system message block, the preamble information block is received, and it is assumed that the synchronization signal and the synchronization system message block are sent periodically in sequence; in the case where the preamble information block includes the synchronization signal and the synchronization system message block, the preamble information block is received, and it is assumed that the synchronization signal and the synchronization system message block are sent at the same period; in the case where the preamble information block includes the synchronization signal, the primary system message bearer channel, and the secondary system message bearer channel, the preamble information block is received, and it is assumed that the synchronization signal, the primary system message bearer channel, and the secondary system message bearer channel are sent periodically in sequence; in the case where the preamble information block includes the synchronization signal, the primary system message bearer channel, and the secondary system message bearer channel, the preamble information block is received, and it is assumed that after the synchronization signal and the primary system message bearer channel are sent at the same period, and the secondary system message bearer channel is sent periodically; or in the case where the preamble information block includes the synchronization signal, the primary system message bearer channel, and the secondary system message bearer channel, the preamble information block is received, and it is assumed that the synchronization signal, the primary system message bearer channel, and the secondary system message bearer channel are sent at the same period.

In an embodiment, the preamble information block is received in the manners below according to the detection result of the first signal.

In the case where the preamble information block includes the second signal, other channels and/or signals in the preamble information block are received according to the detection result of the second signal.

The data transmission apparatus provided in this embodiment is configured to implement the data transmission method applied to the first communication node in the embodiment shown in FIG. 1. The data transmission apparatus provided in this embodiment has the similar implementation principle and technical effect, and the details are not repeated here.

In an embodiment, FIG. 24 is a block diagram of another data transmission apparatus according to an embodiment of the present application. This embodiment may be implemented by a data transmission device. The data transmission device may be a base station. As shown in FIG. 24, this embodiment includes a first sender 410 and a second sender 420.

The first sender 410 is configured to send the first signal. The first signal is used to indicate sending of the preamble information block.

The second sender 420 is configured to send the preamble information block. The preamble information block includes at least one of the following: a synchronization system message block, a synchronization signal, a primary system message bearer channel, a secondary system message bearer channel, a first reference signal, or a second signal.

In an embodiment, the preamble information block includes a synchronization system message block. The preamble information block is sent in the following manner: The synchronization system message block is sent by using the first time unit as a period.

In an embodiment, the preamble information block includes the synchronization system message block and the secondary system message bearer channel. The preamble information block is sent in one of the following manners: After the synchronization system message block is sent by using the first time unit as a period first, the secondary system message bearer channel is sent by using the second time unit as a period, or the synchronization system message block and the secondary system message bearer channel are sent by using the third time unit as a period.

In an embodiment, the preamble information block includes the synchronization signal and the primary system message bearer channel. The preamble information block is sent in at least one of the following manners: After the synchronization signal is sent by using the fourth time unit as a period first, the primary system message bearer channel is sent by using the fifth time unit as a period; or the synchronization signal and the primary system message bearer channel are sent by using the sixth time unit as a period.

In an embodiment, the preamble information block includes the synchronization signal and the synchronization system message block. The preamble information block is sent in at least one of the following manners: After the synchronization signal is sent by using the seventh time unit as a period first, the synchronization system message block is sent by using the eighth time unit as a period; or the synchronization signal and the synchronization system message block are sent by using the ninth time unit as a period.

In an embodiment, the preamble information block includes the synchronization signal, the primary system message bearer channel, and the secondary system message bearer channel. The preamble information block is sent in at least one of the following manners: After the synchronization signal is sent by using the tenth time unit as a period first, and the primary system message bearer channel is sent by using the eleventh time unit as a period, the secondary system message bearer channel is sent by using the twelfth time unit as a period; after the synchronization signal and the primary system message bearer channel are sent by using the thirteenth time unit as a period first, the secondary system message bearer channel is sent by using the fourteenth time unit as a period; or the synchronization signal, the primary system message bearer channel, and the secondary system message bearer channel are sent by using the fifteenth time unit as a period.

In an embodiment, in the case where the synchronization signal includes a first synchronization sub-signal and a second synchronization sub-signal, the synchronization signal is periodically sent in the following manners: After the first synchronization sub-signal is continuously sent first, the second synchronization sub-signal is periodically sent.

In an embodiment, the preamble information block includes the first reference signal. The preamble information block is sent in the following manner: The first reference signal is sent by using the sixteenth time unit as a period.

In an embodiment, the preamble information block is sent in the following manner: The preamble information block is sent according to the first information. The first information is used to indicate the sending position of the preamble information block.

In an embodiment, the first information includes the frequency domain position where the first signal is sent, the time domain position where the first signal is sent, the frequency domain position indication information carried by the first signal, the time domain position indication information carried by the first signal, and the index information corresponding to the first signal.

In an embodiment, the preamble information block is sent in the following manner: The preamble information block corresponding to the first signal is sent according to the mapping relationship between the first signal and the preamble information block.

In an embodiment, the mapping relationship between the first signal and the preamble information block includes at least one of the following: the mapping relationship between the index of the first signal and the frequency domain position of the preamble information block, the mapping relationship between the index of the first signal and the time domain position of the preamble information block, the mapping relationship between the index of the first signal and the time-frequency domain position of the preamble information block, the mapping relationship between the frequency domain position where the first signal is detected and the frequency domain position of the preamble information block, the mapping relationship between the frequency domain position where the first signal is detected and the time-frequency domain position of the preamble information block, the mapping relationship between the time domain position where the first signal is detected and the time domain position of the preamble information block, or the mapping relationship between the time domain position where the first signal is detected and the time-frequency domain position of the preamble information block.

In an embodiment, the first signal includes at least one of the following: a binary amplitude keying signal or a signal composed of at least one sequence.

In an embodiment, in the case where the preamble information block includes the second signal, the preamble information block is also sent in one of the following manners: The second signal is sent first, and then other channels and/or signals in the preamble information block are sent; the first signal indicates that the cell state is on, the second signal is sent, and then other channels and/or signals in the preamble information block are sent; or the first signal indicates that the cell state is off, and the preamble information block is not sent.

The data transmission apparatus provided in this embodiment is configured to implement the data transmission method applied to the second communication node in the embodiment shown in FIG. 2. The data transmission apparatus provided in this embodiment has the similar implementation principle and technical effect, and the details are not repeated here.

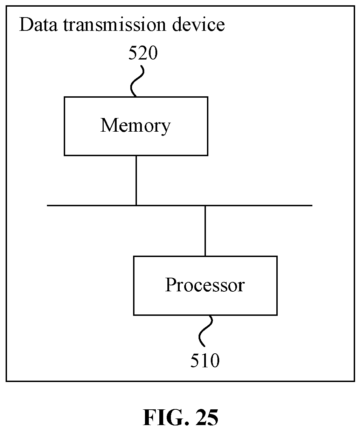

In an embodiment, FIG. 25 is a diagram illustrating the structure of a data transmission device according to an embodiment of the present application. As shown in FIG. 25, the device provided in the present application includes a processor 510 and a memory 520. One or more processors 510 may be provided in the device, with one processor 510 shown as an example in FIG. 25. One or more memories 520 may be provided in the device, with one memory 520 shown as an example in FIG. 25. The processor 510 and memory 520 of the device are connected by a bus or in other manners. The connection by a bus is taken as an example in FIG. 25. In this embodiment, the device may be a terminal (for example, user equipment).

As a computer-readable storage medium, the memory 520 may be configured to store software programs and computer-executable programs and modules, such as program instructions/modules (for example, the detector 310 and the receiver 320 in the data transmission apparatus applied to the first communication node) corresponding to the device according to any embodiment of the present application. The memory 520 may include a program storage region and a data storage region, where the program storage region may store an operating system and an application program required by at least one function, and the data storage region may store data created depending on the use of the device. Additionally, the memory 520 may include a high-speed random-access memory and may also include a nonvolatile memory, such as at least one magnetic disk memory, a flash memory, or another nonvolatile solid-state memory. In some examples, the memory 520 may include memories which are remotely disposed relative to the processor 510, and these remote memories may be connected to the device via a network. Examples of the preceding network include, but are not limited to, the Internet, an intranet, a local area network, a mobile communication network, and a combination thereof.

When serving as the first communication node, the data transmission device may be configured to perform the data transmission method applied to the first communication node in any previous embodiment and has corresponding functions and effects.

When serving as the second communication node, the data transmission device may be configured to perform the data transmission method applied to the second communication node in any previous embodiment and has corresponding functions and effects.

An embodiment of the present application provides a storage medium containing computer-executable instructions, where the computer-executable instructions, when executed by a processor of a computer, are used to perform a data transmission method applied to the first communication node. The method includes the following manners: The first signal is detected, and the preamble information block is received according to the detection result of the first signal. The preamble information block includes at least one of the following: a synchronization system message block, a synchronization signal, a primary system message bearer channel, a secondary system message bearer channel, a first reference signal, or a second signal.

An embodiment of the present application provides a storage medium containing computer-executable instructions, where the computer-executable instructions, when executed by a processor of a computer, are used to perform a data transmission method applied to the second communication node. The method includes the following manners: The first signal is sent, where the first signal is used to indicate sending of the preamble information block; and the preamble information block is sent. The preamble information block includes at least one of the following: a synchronization system message block, a synchronization signal, a primary system message bearer channel, a secondary system message bearer channel, a first reference signal, or a second signal.

It is to be understood by those skilled in the art that the term "user equipment" encompasses any suitable type of wireless user equipment, such as a mobile phone, a portable data processing apparatus, a portable web browser or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

## Claims

1. A data transmission method, applied to a first communication node, comprising:
detecting a first signal; and
receiving a preamble information block according to a detection result of the first signal, wherein the preamble information block comprises at least one of: a synchronization system message block, a synchronization signal, a primary system message bearer channel, a secondary system message bearer channel, a first reference signal, or a second signal.

2. The data transmission method according to claim 1, wherein receiving the preamble information block according to the detection result of the first signal comprises:
in response to the first signal being detected, receiving the preamble information block according to first information, wherein the first information is used to determine a receiving position of the preamble information block.

3. The data transmission method according to claim 2, wherein the first information comprises:
a frequency domain position where the first signal is detected,
a time domain position where the first signal is detected,
frequency domain position indication information carried by the first signal,
time domain position indication information carried by the first signal, and
index information corresponding to the first signal.

4. The data transmission method according to claim 1, wherein receiving the preamble information block according to the detection result of the first signal comprises:
in response to the first signal being detected, receiving the preamble information block, wherein a mapping relationship between the first signal and the preamble information block is predefined.

5. The data transmission method according to claim 4, wherein the mapping relationship between the first signal and the preamble information block comprises at least one of:
a mapping relationship between an index of the first signal and a frequency domain position of the preamble information block,
a mapping relationship between an index of the first signal and a time domain position of the preamble information block,
a mapping relationship between an index of the first signal and a time-frequency domain position of the preamble information block,
a mapping relationship between a frequency domain position where the first signal is detected and a frequency domain position of the preamble information block,
a mapping relationship between a frequency domain position where the first signal is detected and a time-frequency domain position of the preamble information block,
a mapping relationship between a time domain position where the first signal is detected and a time domain position of the preamble information block, or
a mapping relationship between a time domain position where the first signal is detected and a time-frequency domain position of the preamble information block.

6. The data transmission method according to claim 1, wherein the first signal comprises at least one of: a binary amplitude keying signal or a signal composed of at least one sequence.

7. The data transmission method according to claim 1, wherein receiving the preamble information block according to the detection result of the first signal comprises:
in response to the first signal being detected, receiving the preamble information block and determining that the preamble information block is sent periodically.

8. The data transmission method according to claim 7, wherein receiving the preamble information block and determining that the preamble information block is sent periodically comprise at least one of:
in response to the preamble information block comprising the synchronization system message block, receiving the preamble information block and determining that the synchronization system message block is sent periodically;
in response to the preamble information block comprising the synchronization system message block and the secondary system message bearer channel, receiving the preamble information block and determining that the synchronization system message block and the secondary system message bearer channel are sent periodically in sequence;
in response to the preamble information block comprising the synchronization system message block and the secondary system message bearer channel, receiving the preamble information block and determining that the synchronization system message block and the secondary system message bearer channel are sent at a same period;
in response to the preamble information block comprising the synchronization signal and the primary system message bearer channel, receiving the preamble information block and determining that the synchronization signal and the primary system message bearer channel are sent periodically in sequence;
in response to the preamble information block comprises the synchronization signal and the primary system message bearer channel, receiving the preamble information block and determining that the synchronization signal and the primary system message bearer channel are sent at a same period;
in response to the preamble information block comprises the synchronization signal and the synchronization system message block, receiving the preamble information block and determining that the synchronization signal and the synchronization system message block are sent periodically in sequence;
in response to the preamble information block comprises the synchronization signal and the synchronization system message block, receiving the preamble information block and determining that the synchronization signal and the synchronization system message block are sent at a same period;
in response to the preamble information block comprising the synchronization signal, the primary system message bearer channel, and the secondary system message bearer channel, receiving the preamble information block and determining that the synchronization signal, the primary system message bearer channel, and the secondary system message bearer channel are sent periodically in sequence;
in response to the preamble information block comprising the synchronization signal, the primary system message bearer channel, and the secondary system message bearer channel, receiving the preamble information block and determining that after the synchronization signal and the primary system message bearer channel are sent at a same period, the secondary system message bearer channel is sent periodically; or
in response to the preamble information block comprising the synchronization signal, the primary system message bearer channel, and the secondary system message bearer channel, receiving the preamble information block and determining that the synchronization signal, the primary system message bearer channel, and the secondary system message bearer channel are sent at a same period.

9. The data transmission method according to claim 1, wherein receiving the preamble information block according to the detection result of the first signal comprises:
in response to the first signal being detected and the preamble information block comprising the second signal, detecting the second signal and receiving at least one of a channel or a signal other than the second signal in the preamble information block according to a detection result of the second signal.

10. A data transmission method, applied to a second communication node, comprising:
sending a first signal, wherein the first signal is used to indicate sending of a preamble information block; and
sending the preamble information block, wherein the preamble information block comprises at least one of: a synchronization system message block, a synchronization signal, a primary system message bearer channel, a secondary system message bearer channel, a first reference signal, or a second signal.

11. The data transmission method according to claim 10, wherein,
in response to the preamble information block comprising the synchronization system message block, sending the preamble information block comprises:
sending the synchronization system message block with a first time unit as a period.

12. The data transmission method according to claim 10, wherein,
in response to the preamble information block comprising the synchronization system message block and the secondary system message bearer channel, sending the preamble information block comprises one of:
first sending the synchronization system message block with a first time unit as a period, then sending the secondary system message bearer channel with a second time unit as a period; or
sending the synchronization system message block and the secondary system message bearer channel with a third time unit as a period.

13. The data transmission method according to claim 10, wherein,
in response to the preamble information block comprising the synchronization signal and the primary system message bearer channel, sending the preamble information block comprises at least one of:
first sending the synchronization signal with a fourth time unit as a period, then sending the primary system message bearer channel with a fifth time unit as a period; or
sending the synchronization signal and the primary system message bearer channel with a sixth time unit as a period.

14. The data transmission method according to claim 10, wherein,
in response to the preamble information block comprising the synchronization signal and the synchronization system message block, sending the preamble information block comprises at least one of:
first sending the synchronization signal with a seventh time unit as a period, then sending the synchronization system message block with an eighth time unit as a period; or
sending the synchronization signal and the synchronization system message block with a ninth time unit as a period.

15. The data transmission method according to claim 10, wherein,
in response to the preamble information block comprising the synchronization signal, the primary system message bearer channel, and the secondary system message bearer channel, sending the preamble information block comprises at least one of:
first sending the synchronization signal with a tenth time unit as a period and then sending the primary system message bearer channel with an eleventh time unit as a period, finally sending the secondary system message bearer channel with a twelfth time unit as a period;
first sending the synchronization signal and the primary system message bearer channel with a thirteenth time unit as a period, then sending the secondary system message bearer channel with a fourteenth time unit as a period; or
sending the synchronization signal, the primary system message bearer channel, and the secondary system message bearer channel with a fifteenth time unit as a period.

16. The data transmission method according to any one of claims 13 to 15, wherein in response to the synchronization signal comprising a first synchronization sub-signal and a second synchronization sub-signal, periodically sending the synchronization signal comprises:
first continuously sending the first synchronization sub-signal, then periodically sending the second synchronization sub-signal.

17. The data transmission method according to claim 10, wherein,
in response to the preamble information block comprising the first reference signal, sending the preamble information block comprises:
sending the first reference signal with a sixteenth time unit as a period.

18. The data transmission method according to claim 10, wherein sending the preamble information block comprises:
sending the preamble information block according to first information, wherein the first information is used to indicating a sending position of the preamble information block and comprises:
a frequency domain position where the first signal is sent,
a time domain position where the first signal is sent,
frequency domain position indication information carried by the first signal,
time domain position indication information carried by the first signal, and
index information corresponding to the first signal.

19. The data transmission method according to claim 10, wherein sending the preamble information block comprises:
sending the preamble information block corresponding to the first signal according to a mapping relationship between the first signal and the preamble information block,
wherein the mapping relationship between the first signal and the preamble information block comprises at least one of:
a mapping relationship between an index of the first signal and a frequency domain position of the preamble information block,
a mapping relationship between an index of the first signal and a time domain position of the preamble information block,
a mapping relationship between an index of the first signal and a time-frequency domain position of the preamble information block,
a mapping relationship between a frequency domain position where the first signal is detected and a frequency domain position of the preamble information block,
a mapping relationship between a frequency domain position where the first signal is detected and a time-frequency domain position of the preamble information block,
a mapping relationship between a time domain position where the first signal is detected and a time domain position of the preamble information block, or
a mapping relationship between a time domain position where the first signal is detected and a time-frequency domain position of the preamble information block.

20. The data transmission method according to claim 10, wherein the first signal comprises at least one of: a binary amplitude keying signal or a signal composed of at least one sequence.

21. The data transmission method according to claim 10, wherein in response to the preamble information block comprises the second signal, sending the preamble information block comprises one of:
first sending the second signal and then sending at least one of a channel or a signal other than the second signal in the preamble information block;
in response to the first signal indicating that a cell state is on, first sending the second signal, and then sending at least one of a channel or a signal other than the second signal in the preamble information block; or
in response to the first signal indicating that a cell state is off, and not sending the preamble information block.

22. A data transmission device, comprising a memory and at least one processor, wherein
the memory is configured to store at least one program; and
when executing the at least one program, the at least one processor performs the data transmission method according to any one of claims 1 to 9 or 10 to 21.

23. A storage medium, storing a computer program, wherein when executing the computer program, a processor performs the data transmission method according to any one of claims 1 to 9 or 10 to 21.
